# EUROPÄISCHE PATENTSCHRIFT

(11) **EP 2 318 154 B1**
(45) Veröffentlichungstag und Bekanntmachung des Hinweises auf die Patenterteilung: **04.01.2012**
(21) Anmeldenummer: 09782309.0
(22) Anmeldetag: 28.08.2009
(51) Int. Cl.: B07C 3/00, G10L 15/28

(54) **VERFAHREN UND VORRICHTUNG ZUM STEUERN DES TRANSPORTS EINES GEGENSTANDS ZU EINEM VORGEGEBENEN ZIELPUNKT**
METHOD AND DEVICE FOR CONTROLLING THE TRANSPORT OF AN OBJECT TO A PREDETERMINED DESTINATION
PROCÉDÉ ET DISPOSITIF DE COMMANDE DU TRANSPORT D'UN OBJET VERS UN POINT DE DESTINATION PRÉDÉTERMINÉ

(30) Priorität: 28.08.2008 DE 102008044833
(43) Veröffentlichungstag der Anmeldung: 11.05.2011
(73) Patentinhaber: Siemens Aktiengesellschaft, 80333 München (DE)
(72) Erfinder: RAUH, Ingolf, 78479 Reichenau (DE)
(86) Internationale Anmeldenummer: PCT/EP2009/061108
(87) Internationale Veröffentlichungsnummer: WO 2010/023262

(56) Entgegenhaltungen:
- WO-A-2007/135137

## Beschreibung

Die Erfindung betrifft ein Verfahren und eine Vorrichtung zum Steuern des Transports eines Gegenstands zu einem vorgegebenen Zielpunkt, insbesondere eines Pakets zu einer Zustelladresse.

In US 6,819,777 B2 werden ein Verfahren und eine Vorrichtung beschrieben, um eine Zustelladresse auf einer Postsendung zu ermitteln und die Postsendung anschließend zu transportieren. Ein rechnerverfügbares Abbild der Postsendung wird erzeugt, welches die Zustelladresse zeigt. Zunächst versucht eine Komponente zur Zeichenerkennung ("Optical Character Recognition", OCR), automatisch die Zustelladresse zu lesen. Gelingt dies nicht, so wird das Abbild auf einem Bildschirm dargestellt. Eine Bedienkraft liest die Zustelladresse im Abbild und gibt sie über eine Tastatur und/oder über eine Spracherfassungsstation ein. In einer Ausgestaltung werden mehrere Abbilder zeitlich überlappend auf dem Bildschirm dargestellt.

Eine Vorrichtung mit den Merkmalen des Oberbegriffs des Anspruchs 13 und ein Verfahren mit den Merkmalen des Oberbegriffs des Anspruchs 1 sind aus WO 2007/135137 A1 bekannt. In dieser Druckschrift werden ein Verfahren und eine Vorrichtung beschrieben, um auch dann die Zustelladresse automatisch zu ermitteln, wenn dies schwieriger möglich ist als bei einem Standardbrief, z. B. die Zustelladresse eines Pakets. Die Vorrichtung umfasst
- eine Spracherfassungsstation,
- eine Kamera ("Scanner"),
- ein Spracherkennungssystem ("voice recognition system"),
- ein Zeichenerkennungssystem ("OCR system") und
- eine Fördereinrichtung ("conveyor").

Eine Bedienkraft ergreift ein Paket, liest die Zustelladresse auf dem Paket, spricht wenigstens einen Teil der Zustelladresse in die Spracherfassungsstation. Die Sprachnachricht wird konvertiert und an das Spracherkennungssystem übermittelt. Dieses Spracherkennungssystem umfasst eine Datenbank mit gültigen Zustelladressen, z. B. gültigen Ortsangaben, vergleicht die konvertierte Sprachnachricht mit gültigen Zustelladressen in der Datenbank und generiert eine sortierte Kandidatenliste mit gültigen Zustelladressen. Diese Liste wird absteigend nach dem jeweiligen "audio score" sortiert, das ist ein Maß für die Übereinstimmung zwischen konvertierter Sprachnachricht und der abgespeicherten Zustelladresse.

Die Bedienkraft stellt das Paket auf das Förderband, nachdem sie die Zustelladresse in die Spracherfassungsstation gesprochen hat. Das Förderband transportiert das Paket zu einer Kamera. Diese erzeugt ein rechnerverfügbares Abbild vom Paket. Das Zeichenerkennungssystem ermittelt die Zustelladresse, wofür es das Abbild auswertet und die Kandidatenliste vom Spracherkennungssystem verwendet. Hierbei wendet das Zeichenerkennungssystem eine "thresholding method" an, um die "audio scores" mit Glaubwürdigkeitsmaßen vergleicht, die die Glaubwürdigkeit eines per OCR ermittelten Leseergebnisses bewerten.

Auch in DE 19718805 C2 werden ein Verfahren und eine Vorrichtung beschrieben, um eine Kandidatenliste von einem Spracherkennungssystem mit einer zweiten Kandidatenliste von einem Zeichenerkennungssystem zu vergleichen.

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 13 bereitzustellen, durch welches die Gefahr einer fehlerhaften Ermittlung des Zielpunkts verringert wird, ohne den Durchsatz von Gegenständen durch die Spracherfassungsstation zu reduzieren.

Die Aufgabe wird durch eine Vorrichtung mit den Merkmalen des Anspruchs 1 und ein Verfahren mit den Merkmalen des Anspruchs 13 gelöst. Vorteilhafte Ausgestaltungen sind in den Unteransprüchen angegeben.

Der Gegenstand ist mit Angaben zu einem Zielpunkt, zu dem der Gegenstand zu transportieren ist, versehen. Die Zielpunkt-Angaben, mit denen der Gegenstand versehen ist, werden in eine Spracherfassungsstation eingegeben. Ein Spracherkennungssystem wertet die von der Spracherfassungsstation erfassten Zielpunkt-Angaben aus. Eine Fördereinrichtung transportiert den Gegenstand ab. Der Zielpunkt, mit dessen Angaben der Gegenstand versehen ist, wird ermittelt. Um den Zielpunkt zu ermitteln, wird das Auswertungsergebnis des Spracherkennungssystems verwendet. Ein Freigabesignal wird erzeugt. Das Freigabesignal löst die beiden folgenden Vorgänge aus:
- Die Spracherfassungsstation wird für die Eingabe von Zielpunkt-Angaben zu einem weiteren Gegenstand freigegeben.
- Die Fördereinrichtung transportiert den Gegenstand ab.

Der Transport des Gegenstands an den ermittelten Zielpunkt wird ausgelöst.

Lösungsgemäß ist das Spracherkennungssystem in einen Haupt-Spracherkenner und einen Zusatz-Spracherkenner unterteilt. Die beiden Spracherkenner werten unabhängig voneinander die Spracheingabe mit den erfassten Zielpunkt-Angaben aus. Der Haupt-Spracherkenner lässt sich auf das Ziel optimieren, die Zielpunkt-Angaben schnell auszuwerten und insbesondere den Abschluss der Spracheingabe rasch zu erkennen, um so schnell wie möglich ein Freigabesignal zu erzeugen und dadurch den Weitertransport des Gegenstands auszulösen. Dieses Freigabesignal schaltet außerdem die Spracherfassungsstation für die Eingabe von weiteren Zielpunkt-Angaben frei. Dem Zusatz-Spracherkenner steht mehr Rechenzeit zur Verfügung, so dass der Zusatz-Spracherkenner eine tiefergehende Auswertung mit einer geringeren Fehlergefahr durchführen kann.

Weil das Freigabesignal frühzeitig erzeugt wird, wird vermieden, dass man mit der Spracheingabe solange warten muss, bis auch der Zusatz-Spracherkenner seine Auswertung abgeschlossen hat, die tiefergehend ist und daher länger dauert. Vielmehr hängt das Freigabesignal nur vom schneller arbeitenden Haupt-Spracherkenner ab.

Der Zielpunkt wird auf der Basis von zwei Auswertungen geliefert, die zwei Spracherkenner unabhängig voneinander geliefert haben. Dadurch sinkt die Gefahr, dass der Zielpunkt fehlerhaft ermittelt wird.

Die beiden Spracherkenner lassen sich dergestalt miteinander synchronisieren, dass sie in überlappenden Zeiträumen ihre Auswertungen durchführen. Möglich, aber nicht erforderlich ist, dass der eine Spracherkenner auf das Ergebnis vom anderen Spracherkenner wartet.

Weil das Freigabesignal erzeugt wird, nachdem der Haupt-Spracherkenner die Auswertung abgeschlossen hat und bevor die Spracherfassungsstation wieder freigegeben ist, braucht der Haupt-Spracherkenner sein Auswertungsergebnis nicht zwischenzuspeichern. Vielmehr kommt eine weitere Spracheingabe, die vom Haupt-Spracherkenner auszuwerten ist, erst nach dem Freigabesignal.

Das Auswertungsergebnis des Haupt-Spracherkenners lässt sich an den Zusatz-Spracherkenner oder an eine zentrale Erkennungseinheit, z. B. einem "voting system", übermitteln, sobald die Fördereinrichtung damit beginnt, den Gegenstand abzutransportieren. Weil die Transportgeschwindigkeit der Fördereinrichtung in der Regel bekannt ist, erleichtert diese Ausgestaltung die Synchronisation und die Zuordnung zwischen dem Gegenstand und dem Auswertungsergebnis vom Haupt-Spracherkenner, das sich auf diesen Gegenstand bezieht. Dieser Vorteil ist insbesondere dann wichtig, wenn viele Gegenstände zu transportieren sind, z. B. eine Abfolge von Paketen.

Die Fördereinrichtung transportiert den Gegenstand vorzugsweise zu einer weiteren Bearbeitungsstation. Typischerweise benötigt die Fördereinrichtung mindestens mehrere Sekunden, um den Gegenstand zu dieser Bearbeitungsstation zu transportieren. Diese Transportzeit steht dem Zusatz-Spracherkenner zur Verfügung, um die Spracheingabe mit den Zielpunkt-Angaben zum Gegenstand auszuwerten. Das Auswertungsergebnis des Zusatz-Spracherkenners braucht erst dann zur Verfügung zu stehen, wenn der Gegenstand die weitere Bearbeitungsstation erreicht hat. Sobald das Ergebnis des Zusatz-Spracherkenners zur Verfügung steht, kann die weitere Bearbeitungsstation dieses Ergebnis zur Bearbeitung des Gegenstands verwenden.

Weil die Fördereinrichtung den Gegenstand erst dann abtransportiert, wenn der Haupt-Spracherkenner seine Auswertung abgeschlossen hat, wird es ermöglicht, dass der Ort, an den die Fördereinrichtung den Gegenstand transportiert, von demjenigen Auswertungsergebnis abhängig gemacht wird, das der Haupt-Spracherkenner liefert. Dies ermöglicht es beispielsweise, dass die Fördereinrichtung den Gegenstand an einen ersten Zwischenpunkt transportiert, den bereits der Haupt-Spracherkenner erkannt hat. Sobald der Gegenstand den ersten Zwischenpunkt erreicht, steht das Ergebnis des Zusatz-Spracherkenners zur Verfügung, was einen weiteren Transport oder die weitere Sortierung des Gegenstands ermöglicht.

Vorzugsweise arbeitet der Haupt-Spracherkenner nach einer festen Taktung. Die Spracheingabe wird durch ein Eingabesignal abgeschlossen, oder das Ende der Spracheingabe wird automatisch erkannt. Spätestens eine vorgegebene Zeitschranke nach Erzeugung des Eingabesignals wird die Spracherfassungsstation wieder freigegeben. Nicht erforderlich ist es, die Sprachnachricht zwischenzuspeichern.

Bevorzugt erkennt der Haupt-Spracherkenner automatisch, wann die Eingabe von Zielpunkt-Angaben zu einem Gegenstand abgeschlossen ist, beispielsweise indem der Sprechende eine zureichend lange Pause macht. Die Auswertung dieser Spracheingabe mit den Zielpunkt-Angaben führt ausschließlich der Zusatz-Spracherkenner durch. Dadurch lässt sich eine Taktung des Haupt-Spracherkenners mit einer kurzen Taktzeit realisieren.

Vorzugsweise umfasst der Zusatz-Spracherkenner mehrere parallel arbeitende Einzel-Spracherkenner. Jeder einzelne Spracherkenner wertet jeweils eine Spracheingabe aus, und zwar vorzugsweise, nachdem der Haupt-Spracherkenner diese Spracheingabe ausgewertet hat und das Freigabesignal erzeugt wurde. Dadurch wird ermöglicht, dass der Zusatz-Spracherkenner mehrere Spracheingaben zeitlich überlappend auswertet, was Zeit gegenüber einer seriellen Abarbeitung einspart. Ermöglicht wird es, in dem Zeitraum, in dem der Zusatz-Spracherkenner eine Spracheingabe auswertet, Zielpunkt-Angaben zu mehreren weiteren Gegenständen einzugeben und vom Haupt-Spracherkenner verarbeiten zu lassen.

In einer bevorzugten Ausgestaltung werden die erfassten Zielpunkt-Angaben von der Spracherfassungsstation lediglich zum Haupt-Spracherkenner übermittelt, aber nicht von der Spracherfassungsstation direkt zum Zusatz-Spracherkenner. Der Haupt-Spracherkenner übermittelt sein eigenes Auswerteergebnis an den Zusatz-Spracherkenner. Beispielsweise erkennt der Haupt-Spracherkenner, wann eine Spracheingabe zu einem Gegenstand beendet ist, und bereinigt diese Spracheingabe von Störgeräuschen. Diese Ausgestaltung erleichtert die Synchronisation zwischen den beiden Spracherkennern. Sie spart weiterhin die Notwendigkeit ein, dass die Spracherfassungsstation die erfassten Zielpunkt-Angaben zwischenspeichern muss.

Im Folgenden werden zwei Anordnungen beschrieben, in denen das lösungsgemäße Verfahren eingesetzt werden kann. Die erste Anordnung ermittelt den Zielpunkt nur unter Verwendung der Spracheingabe, die von den beiden Spracherkennern ausgewertet wird. Die zweite Anordnung wertet zusätzlich ein Abbild des Gegenstands aus, um optisch den Zielpunkt zu erkennen.

Wird das lösungsgemäße Verfahren in der ersten Anordnung verwendet, so spart die Verwendung der beiden Spracherkenner ein Bildaufnahmegerät und ein Zeichenerkennungssystem ein. Diese Ausgestaltung lässt sich beispielsweise für die Gepäckbeförderung innerhalb eines Flughafens oder Hafens oder den Materialfluss innerhalb einer Fabrik verwenden. Zunächst wird der Gegenstand in eine Region transportiert, z. B. einen Zwischenpunkt, der für mehrere Zielpunkte zuständig ist.

Das Auswertungsergebnis des Haupt-Spracherkenners steht bereits dann zur Verfügung, wenn das Freigabesignal erzeugt wird und die Fördereinrichtung damit beginnt, den Gegenstand abzutransportieren. Dadurch lässt sich das Auswertungsergebnis des Haupt-Spracherkenners dazu verwenden, um bei Transportbeginn automatisch zu entscheiden, wohin die Fördereinrichtung den Gegenstand transportiert. Beispielsweise wird entschieden, in welche von mehreren möglichen Zwischenpunkten der Gegenstand transportiert wird. Hierfür wird ausschließlich das Auswertungsergebnis vom Haupt-Spracherkenner verwendet.

Wenn der Gegenstand den Zwischenpunkt erreicht hat, steht das Auswertungsergebnis vom Zusatz-Spracherkenner zur Verfügung. Anschließend wird der Gegenstand vom jeweiligen Zwischenpunkt zu einem Zielpunkt transportiert. Das Auswertungsergebnis vom Zusatz-Spracherkenner wird dazu verwendet, um zu entscheiden, zu welchem Zielpunkt dieser Gegenstand transportiert wird - oder um den Gegenstand zu einem anderen Zwischenpunkt zu transportieren, wenn festgestellt wird, dass der Haupt-Spracherkenner einen falschen Zwischenpunkt erkannt hat.

In der zweiten Anordnung wird zusätzlich ein Abbild des Gegenstands verwendet, um den Zielpunkt zu erkennen. Die Fördereinrichtung transportiert den Gegenstand zu einem Bildaufnahmegerät. Dieses Bildaufnahmegerät erzeugt ein optisches Abbild des Gegenstands. Ein Zeichenerkennungssystem wertet das Abbild aus. Das Auswertungsergebnis des Zeichenerkennungssystems wird zusätzlich verwendet, um den Zielpunkt zu ermitteln.

Dank dieser Ausgestaltung steht das Auswerteergebnis vom Spracherkennungssystem bereits zur Verfügung, wenn das Zeichenerkennungssystem seine Auswertung beginnt. Möglich ist, dass das Zeichenerkennungssystem dieses Auswertungsergebnis der Spracheingabe verwendet. Beispielsweise wählt das Zeichenerkennungssystem abhängig von diesem Auswerteergebnisse eine Adress-Datenbank mit gültigen Zielpunkten aus.

Das lösungsgemäße Verfahren lässt sich insbesondere dann verwenden, wenn Gegenstände zu transportieren sind, deren Zielpunkte nicht allein optisch erfasst werden können, weil die Gegenstände zu groß sind und/oder weil die Zielpunkt-Angaben sich nur schwer automatisch erfassen lassen. Diese Gegenstände sind z. B. Gepäckstücke von Reisenden, Transportbehälter, Werkstücke in einer Produktionsanlage oder auch Packungen mit Arzneimittel. Weil ein Bearbeiter den Gegenstand umlädt, benötigt er beide Hände und kann keine Eingaben mit einer Tastatur machen. Daher bleibt nur die Spracheingabe.

Im Folgenden wird die Erfindung anhand eines Ausführungsbeispiels beschrieben. Dabei zeigen:
- Fig. 1: schematisch die Anordnung, die Anschriften von Postpaketen erkennt;
- Fig. 2: den zeitlichen Verlauf bei der Erkennung von Anschriften.

Im Ausführungsbeispiel wird das lösungsgemäße Verfahren eingesetzt, um Pakete zu sortieren. Jedes Paket ist mit Angaben zu der jeweiligen Zustelladresse versehen, an die das Paket zu transportieren ist.

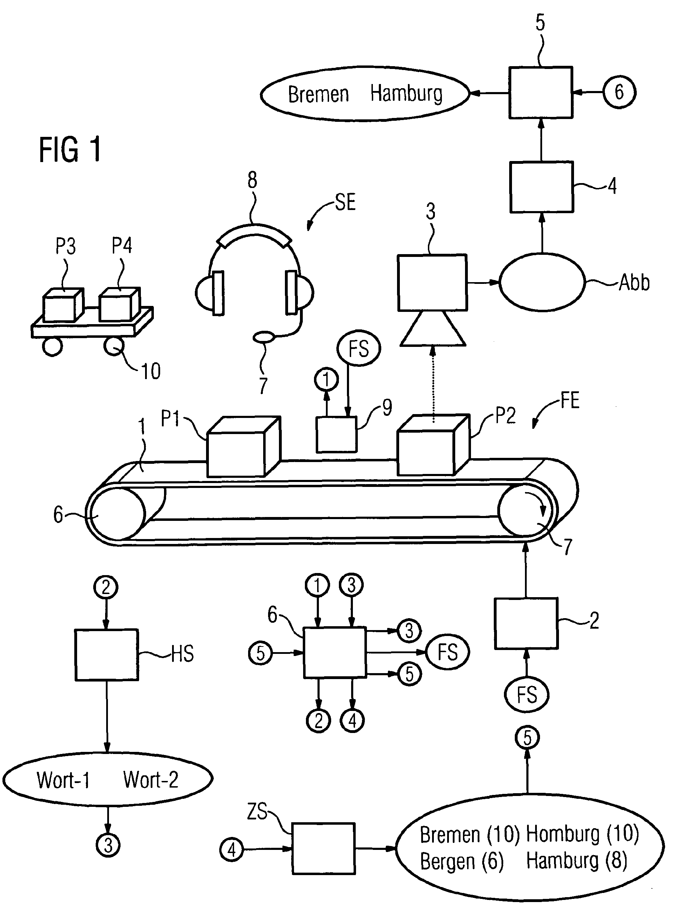

Fig. 1 zeigt eine Anordnung, die das Verfahren realisiert. Diese Anordnung umfasst folgende Bestandteile:
- eine Spracherfassungsstation SE,
- einen Haupt-Spracherkenner HS,
- einen Zusatz-Spracherkenner ZS,
- eine Fördereinrichtung FE mit einem angetriebenes Förderband 1 und einem Antrieb 2 für das Förderband 1,
- ein Bildaufnahmegerät, welches mindestens eine Kamera 3 umfasst,
- ein Zeichenerkennungssystem ("optical character recognition system") 4,
- eine zentrale Erkennungseinheit 5 in Form eines "voting systems" und
- eine Übermittlungs- und Synchronisierungseinheit 6.

Die Übermittlungs- und Synchronisierungseinheit 6 synchronisiert die nachfolgend beschriebenen Verarbeitungsschritte.

Die Spracherfassungsstation SE umfasst ein Mikrophon 7. Möglich ist, dass dieses Mikrophon 7 ortsfest angebracht ist. Vorzugsweise trägt hingegen ein Bearbeiter dieses Mikrophon 7 als Teil eines "headset" am Kopf. Das Mikrophon 7 ist bevorzugt als schnurloses Gerät ausgestaltet und übermittelt seine Ergebnisse z. B. per Funk oder Infrarot oder mittels eines Mobilfunk-Übertragungsprotokolls an einen ortsfesten Empfänger 9.

In einer Ausgestaltung umfasst die Spracherfassungsstation SE zusätzlich einen Kopfhörer 8. Über diesen Kopfhörer 8 wird dem Bearbeiter das Freigabesignal FS akustisch mitgeteilt, so dass der Bearbeiter anschließend eine weitere Spracheingabe in die Spracherfassungsstation SE vornehmen kann.

Der Bearbeiter nimmt ein Paket von einer Zuführeinrichtung oder aus einem Behälter oder einer Palette oder einem antriebslosen Wagen 10. Im Beispiel der Fig. 1 liegen noch zwei Pakete P3, P4 auf einem antriebslosen Wagen 10.

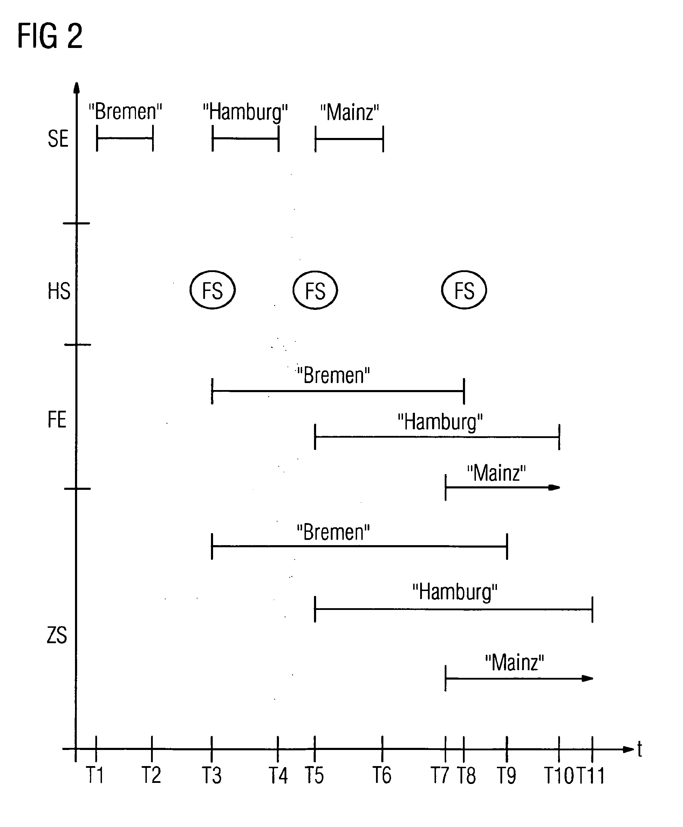

Der Bearbeiter sucht die Zustelladresse auf dem Paket, liest diese Zustelladresse ganz oder wenigstens teilweise und spricht das Gelesene in das Mikrophon 7 ein. Beispielsweise spricht er entweder das Land oder die Stadt ein. Zum Abtransport des Pakets reichen diese Angaben aus. Im Beispiel von Fig. 1 und Fig. 2 spricht er nur den Ort ein, wenn die Zustelladresse im Inland liegt, oder das Land, wenn die Zustelladresse im Ausland liegt.

Diese Spracheingabe wird in einer Ausführungsform durch ein Eingabesignal abgeschlossen. Möglich ist, dass der Bearbeiter eine Taste betätigt, wenn er die Spracheingabe für eine Zustelladresse abgeschlossen hat. Die Spracheingabe kann auch einfach dadurch abgeschlossen werden, dass der Bearbeiter eine Pause macht, die länger als eine vorgegebene Pausen-Schranke ist, und die Spracherfassungsstation dadurch automatisch erkennt, dass die Eingabe abgeschlossen ist. Möglich ist auch, dass das Ende der Spracheingabe dadurch erkannt wird, dass der Bearbeiter das Paket auf das Förderband legt und eine Lichtschranke dies erkennt.

In einer bevorzugten Ausführungsform erkennt hingegen der Haupt-Spracherkenner HS automatisch, dass die Eingabe der Zielpunkt-Angaben zum Gegenstand abgeschlossen ist. Der Bearbeiter braucht also die Beendigung der Spracheingabe nicht anzuzeigen oder auf andere Weise der Anordnung "mitzuteilen". Der Haupt-Spracherkenner HS erkennt, dass der Sprecher eine Pause gemacht hat, die länger ist als die vorgegebene Pausen-Schranke. Im Beispiel der Fig. 1 erkennt der Haupt-Spracherkenner zunächst, wann die Eingabe des Worts "Wort-1" abgeschlossen ist, und danach, wann die Eingabe des Worts "Wort-2" abgeschlossen ist.

Die Spracherfassungsstation SE wandelt jede erfasste Spracheingabe mit Angaben zur Zustelladresse in eine Abfolge von elektrischen Signalen um. Diese Abfolge übermittelt die Übermittlungs- und Synchronisierungseinheit 6 von der Spracherfassungsstation SE an den Haupt-Spracherkenner HS. Bevorzugt erkennt dieser Haupt-Spracherkenner HS automatisch, wann der Bearbeiter die Eingabe der Zustelladress-Angaben zu einem Paket abgeschlossen hat.

In allen Ausführungsformen legt der Bearbeiter das Paket auf das Förderband 1, nachdem die Spracheingabe abgeschlossen ist. Der Bearbeiter legt das Paket so auf das Förderband 1, dass die Zustelladresse auf der nach oben zeigenden Seite des Pakets zu sehen ist. Im Beispiel von Fig. 1 legt der Bearbeiter das Paket P1 auf das Förderband 1, nachdem er dessen Zustelladresse teilweise gelesen hat.

Die Anordnung erzeugt ein Freigabesignal FS. Dieses Freigabesignal FS löst folgende beiden Vorgänge aus:
- Die Spracherfassungsstation SE wird für die Spracheingabe von Zielpunkt-Angaben zu einem weiteren Paket P3 freigegeben.
- Der Antrieb 2 setzt das Förderband 1 in Bewegung, und das angetriebene Förderband 1 transportiert das Paket P1 ab.

In einer Ausgestaltung transportiert das Förderband 1 das Paket P1 eine vordefinierte Strecke weit und stoppt dann ab. In einer anderen Ausgestaltung dreht der Antrieb 2 das Förderband 1 permanent. Eine Lichtschranke oder ein Gewichtssensor überwacht das Förderband 1 und stellt fest, wann der Bearbeiter das Paket 1 auf das Förderband gestellt hat. Das Freigabesignal FS wird erzeugt, sobald der Haupt-Spracherkenner HS seine Auswertung für das Paket P1 abgeschlossen hat und das Paket P1 auf das Förderband 1 gelegt wurde.

Der Bearbeiter entnimmt ein weiteres Paket P3 aus der Zuführeinrichtung oder dem Behälter oder der Palette oder dem Wagen 10. Er liest die weitere Zustelladresse, mit der dieses weitere Paket P3 versehen ist, und gibt diese weitere Zustelladresse in die nunmehr wieder freigegebene Spracherfassungsstation SE ganz oder wenigstens teilweise ein.

Das Förderband 1 transportiert das Paket P2 zu dem Bildaufnahmegerät mit der Kamera 3. Die mindestens eine Kamera 3 erzeugt ein rechnerverfügbares Abbild Abb von derjenigen Seite des Pakets, welches die Zustelladresse zeigt. Möglich ist auch, dass mehrere Kameras Abbilder von verschiedenen Seiten des Pakets P2 anfertigen, um sicherzustellen, dass ein Abbild die Zustelladresse des Pakets P2 zeigt.

Im Ausführungsbeispiel arbeitet der Haupt-Spracherkenner HS seriell. Der Zusatz-Spracherkenner umfasst hingegen mehrere Einzel-Spracherkenner, die zeitlich überlappend arbeiten.

Vorgegeben ist eine Zeitschranke für die Arbeit des Haupt-Spracherkenners HS, beispielsweise eine Sekunde. Der Haupt-Spracherkenner HS arbeitet echtzeitfähig und ist so ausgestaltet, dass er innerhalb dieser Zeitschranke die Beendigung der Spracheingabe für ein Paket erkennt und die erfassten und umgewandelten Zustelladress-Angaben für den Zusatz-Spracherkenner ZS aufbereitet. Der Zeitraum, der dem Haupt-Spracherkenner HS zur Verfügung steht, beginnt, sobald der Bearbeiter bei der Spracheingabe eine Pause macht, die länger als die vorgegebene Pausen-Schranke ist, und endet spätestens dann, wenn die vorgegebene Zeitschranke von z. B. einer Sekunde verstrichen ist. Innerhalb dieses Zeitraums erzeugt der Haupt-Spracherkenner HS ein Auswertungsergebnis. Es liefert an die Übermittlungs- und Synchronisierungseinheit 6 folgende beiden Ergebnisse:
- die umgewandelten erfassten Zustelladress-Angaben und
- das Auswertungsergebnis des Haupt-Spracherkenners HS. Nicht erforderlich ist, dass der Haupt-Spracherkenner HS diese beiden Ergebnisse zwischenspeichert oder puffert.

Im Ausführungsbeispiel erkennt der Haupt-Spracherkenner HS, wann die Spracheingabe zu einem Paket abgeschlossen ist, und bereinigt die umgewandelten erfassten Zustelladress-Angaben von Störgeräuschen und von Spracheingaben, die offensichtlich nicht zum Zielpunkt gehören, z. B. ein Räuspern oder Husten des Sprechenden. Der Haupt-Spracherkenner HS liefert also eine bereinigte Spracheingabe zur Zustelladresse. Weitere Auswertungen führt der Haupt-Spracherkenner HS nicht durch. Insbesondere erkennt der Haupt-Spracherkenner HS nicht die Zustelladresse.

Nachdem der Haupt-Spracherkenner HS diese bereinigte Spracheingabe abgeliefert hat, erzeugt die Übermittlungs- und Synchronisierungseinheit 6 das Freigabesignal FS. Daraufhin steht die Spracherfassungsstation SE für die Eingabe von weiteren Zielpunkt-Eingaben zur Verfügung, und das Förderband 1 transportiert das Paket zum Bilderfassungsgerät 3.

Die Übermittlungs- und Synchronisierungseinheit 6 übermittelt die bereinigte Spracheingabe, die der Haupt-Spracherkenner HS liefert, an den Zusatz-Spracherkenner ZS. Der Zusatz-Spracherkenner ZS wählt einen seiner Einzel-Spracherkenner aus, der gerade nicht die Auswertung von früher erfassten Zielpunkt-Angaben durchführt und daher "frei" ist. Steht aktuell kein Einzel-Spracherkenner zur Verfügung, so speichert der Zusatz-Spracherkenner ZS die umgewandelten Zielpunkt-Angaben sowie das Auswertungsergebnis des Haupt-Spracherkenners HS (die bereinigte Spracheingabe für die Zielpunkt-Angaben) zwischen, bis ein Einzel-Spracherkenner frei ist.

Im Ausführungsbeispiel transportiert das Förderband 1 die Pakete mit einer konstanten Geschwindigkeit. Daher steht fest, wie viel Zeit zwischen
- dem Zeitpunkt, an dem der Haupt-Spracherkenner HS die bereinigte Spracheingabe für ein Paket geliefert hat und das Freigabesignal FS erzeugt wurde, und
- dem Zeitpunkt, an dem das Bildaufnahmegerät 3 das rechnerverfügbare Abbild von diesem Paket erzeugt hat,
zur Verfügung steht. Zwischen diesen beiden Zeitpunkten hat das Paket das Bildaufnahmegerät 3 erreicht. Die Zeitspanne zwischen diesen beiden Zeitpunkten steht dem Zusatz-Spracherkenner ZS zur Verfügung.

Der ausgewählte Einzel-Spracherkenner wertet die bereinigten Spracheingaben, die vom Haupt-Spracherkenner HS geliefert wurden, aus und erkennt die gesprochenen Angaben zur Zustelladresse. In der Regel vermag der Zusatz-Spracherkenner ZS die gesprochenen Zustelladress-Angaben nicht eindeutig zu erkennen, sondern liefert eine Liste mit Kandidaten. Jeder Kandidat ist im Ausführungsbeispiel ein möglicher Zielort, z. B. eine Stadt im Inland oder ein Land. Für jeden Kandidaten berechnet der Zusatz-Spracherkenner ZS zusätzlich ein Sicherheitsmaß (Glaubwürdigkeitsmaß) als Bewertung dafür, wie gut der jeweilige Kandidat mit der bereinigten Spracheingabe übereinstimmt.

Im Beispiel der Fig. 1 liefert der Zusatz-Spracherkenner ZS für das erste Wort die beiden möglichen Ergebnisse "Bremen" mit einem Sicherheitsmaß von 10 und "Bergen" mit einem Sicherheitsmaß von 6. Für das zweite Wort liefert der Zusatz-Spracherkenner ZS die beiden möglichen Ergebnisse "Homburg" mit einem Sicherheitsmaß von 10 und "Hamburg" mit einem Sicherheitsmaß von 8.

Wie bereits dargelegt, liefert das Bildaufnahmegerät 3 mindestens ein rechnerverfügbares Abbild Abb des Pakets P2, welches die Zustelladresse auf dem Paket P2 zeigt. Dieses Abbild wird an das Zeichenerkennungssystem 4 übermittelt. Das Zeichenerkennungssystem 4 erkennt, wo im Abbild Abb die Zustelladresse gezeigt wird (Ermittlung der "region of interest"), und liest die Zustelladresse durch Auswertung des Abbilds Abb. In der Regel vermag auch das Zeichenerkennungssystem 4 die Adresse nicht eindeutig zu lesen, sondern liefert ebenfalls eine Liste mit Kandidaten. Für jeden Kandidaten berechnet das Zeichenerkennungssystem 4 zusätzlich ein Sicherheitsmaß (Glaubwürdigkeitsmaß) als Bewertung dafür, wie gut der jeweilige Kandidat mit dem Abbild übereinstimmt.

In derjenigen Ausgestaltung, die in Fig. 1 gezeigt wird, arbeiten der Zusatz-Spracherkenner ZS und das Zeichenerkennungssystem 4 unabhängig voneinander. In dieser Ausgestaltung werden
- diejenige Liste mit Kandidaten, die der Zusatz-Spracherkenner ZS liefert, und
- diejenige Liste mit Kandidaten, die das Zeichenerkennungssystem 5 liefert,
an die zentrale Erkennungseinheit ("voting system") 5 übermittelt. Diese Erkennungseinheit 5 vergleicht die Kandidaten in den Listen sowie die Sicherheitsmaße und erzeugt eine Gesamtbewertung. Beispielsweise wendet die Erkennungseinheit 5 ein Verfahren an, das aus WO 2007/135137 A1 bekannt ist.

In einer anderen Ausgestaltung wird das Auswertungsergebnis vom Zusatz-Spracherkenner ZS an das Zeichenerkennungssystem 4 übermittelt. Das Zeichenerkennungssystem 4 verwendet dieses Auswertungsergebnis bei seiner Auswertung, z. B. um den Suchraum einzuschränken.

Fig. 2 zeigt den zeitlichen Verlauf bei der Erkennung von Anschriften. Auf der x-Achse ist die Zeit eingetragen, auf der y-Achse sind die verschiedenen Verarbeitungseinheiten veranschaulicht, nämlich die Spracherfassungsstation SE, der Haupt-Spracherkenner HS, die Fördereinrichtung FE und der Zusatz-Spracherkenner ZS.

Im Beispiel von Fig. 2 werden drei Pakete verarbeitet. Das erste Paket ist nach Bremen zu transportieren, das zweite nach Hamburg und das dritte nach Mainz.

Der Bearbeiter gibt in die Spracherfassungsstation SE zunächst das Wort "Bremen" ein, anschließend das Wort "Hamburg" und anschließend das Wort "Mainz". Als Zustelladresse gibt der Bearbeiter nur den Namen des jeweiligen Orts ein, an den das Paket zu transportieren ist. Die Eingabe des Worts "Bremen" nimmt die Zeitspanne zwischen den Zeitpunkten T1 und T2 ein, die Eingabe des Worts "Hamburg" die Zeitspanne zwischen den Zeitpunkten T3 und T4 und die Eingabe des Worts "Mainz" die Zeitspanne zwischen den Zeitpunkten T5 und T6.

Der Haupt-Spracherkenner HS erkennt, wann die Eingabe einer Zustelladresse in die Spracherfassungsstation SE abgeschlossen ist. Im Beispiel von Fig. 2 erkennt der Haupt-Spracherkenner HS zum Zeitpunkt T3, dass die Eingabe des Worts "Bremen" abgeschlossen ist, und erzeugt das Freigabesignal FS. Zum Zeitpunkt T5 erkennt der Haupt-Spracherkenner HS, dass die Eingabe des Worts "Hamburg" abgeschlossen ist, und zum Zeitpunkt T7, dass die Eingabe des Worts "Mainz" abgeschlossen ist. Zu den Zeitpunkten T5 und T7 erzeugt der Haupt-Spracherkenner HS ebenfalls das Freigabesignal FS.

Das Erzeugen des Freigabesignals FS zum Zeitpunkt T3 setzt das Förderband der Fördereinrichtung FE in Bewegung. Zwischen den Zeitpunkten T3 und T8 transportiert das Förderband das Paket mit der Zustelladresse in Bremen zur Kamera. Zwischen den Zeitpunkten T5 und T10 transportiert das Förderband das Paket mit der Zustelladresse in Hamburg zur Kamera. Ab dem Zeitpunkt T7 transportiert das Förderband das Paket mit der Zustelladresse in Mainz zur Kamera.

Zwischen den Zeitpunkten T8 und T9 erzeugt die Kamera ein rechnerverfügbares Abbild Abb des Pakets mit der Zustelladresse in Bremen. Zwischen den Zeitpunkten T10 und T11 erzeugt die Kamera ein rechnerverfügbares Abbild des Pakets mit der Zustelladresse in Hamburg.

Dem Zusatz-Spracherkenner ZS stehen die beiden Zeitspannen, in denen das Paket nach Bremen zur Kamera transportiert wird und die Kamera das Abbild Abb dieses Pakets erzeugt, zur Verfügung, um die Spracheingabe "Bremen" auszuwerten. Diese beiden Zeitspannen ergeben insgesamt den Zeitraum zwischen den beiden Zeitpunkten T3 und T9. Entsprechend steht dem Zusatz-Spracherkenner ZS die Zeitspanne zwischen den Zeitpunkten T5 und T11 zur Verfügung, um die Spracheingabe "Hamburg" auszuwerten, und die Zeitspanne ab dem Zeitpunkt T7, um die Spracheingabe "Mainz" auszuwerten.

### Bezugszeichenliste

| *Bezugszeichen* | *Bedeutung* |
|---|---|
| 1 | angetriebenes Förderband |
| 2 | Antrieb für das Förderband 1 |
| 3 | Kamera des Bildaufnahmegeräts |
| 4 | Zeichenerkennungssystem |
| 5 | zentrale Erkennungseinheit |
| 6 | Übermittlungs- und Synchronisierungseinheit |
| 7 | Mikrophon der Spracherfassungsstation SE |
| 8 | Kopfhörer der Spracherfassungsstation SE |
| 9 | ortsfester Empfänger der Spracherfassungsstation SE |
| 10 | antriebsloser Wagen mit den beiden Paketen P3, P4 |
| Abb | rechnerverfügbares Abbild des Pakets P2 |
| FE | Fördereinrichtung mit Förderband 1 und Antrieb 2 |
| FS | Freigabesignal |
| HS | Haupt-Spracherkenner |
| P1 | Paket, das sich auf dem Förderband 1 befindet und dessen Zustelladresse gerade in die Spracherfassungsstation SE eingegeben wurde |
| P2 | Paket, das sich unter der Kamera 3 befindet und von dem das Abbild Abb erzeugt wird |
| P3, P4 | Pakete auf dem antriebslosen Wagen 10 |
| SE | Spracherfassungsstation |
| T1 | Zeitpunkt, zu dem die Spracheingabe des Worts "Bremen" beginnt |
| T2 | Zeitpunkt, zu dem die Spracheingabe des Worts "Bremen" endet |
| T3 | Zeitpunkt, zu dem die Spracheingabe des Worts "Hamburg" beginnt, zugleich Zeitpunkt, zu dem der Haupt-Spracherkenner HS erkennt, dass die Eingabe des Worts "Bremen" abgeschlossen ist, und das Freigabesignal FS erzeugt wird, zugleich Zeitpunkt, zu dem der Zusatz-Spracherkenner mit der Auswertung des Worts "Bremen" beginnt |
| T4 | Zeitpunkt, zu dem die Spracheingabe des Worts "Hamburg" endet |
| T5 | Zeitpunkt, zu dem die Spracheingabe des Worts "Mainz" beginnt, zugleich Zeitpunkt, zu dem der Haupt-Spracherkenner HS erkennt, dass die Eingabe des Worts "Hamburg" abgeschlossen ist, und das Freigabesignal FS erzeugt wird, zugleich Zeitpunkt, zu dem der Zusatz-Spracherkenner mit der Auswertung des Worts "Hamburg" beginnt |
| T6 | Zeitpunkt, zu dem die Spracheingabe des Worts "Mainz" endet |
| T7 | Zeitpunkt, zu dem der Haupt-Spracherkenner HS erkennt, dass die Eingabe des Worts "Mainz" abgeschlossen ist, und das Freigabesignal FS erzeugt wird, zugleich Zeitpunkt, zu dem der Zusatz-Spracherkenner mit der Auswertung des Worts "Mainz" beginnt |
| T8 | Zeitpunkt, zu dem das Paket nach Bremen die Kamera erreicht |
| T9 | Zeitpunkt, zu dem die Kamera ein Abbild des Pakets nach Bremen erzeugt hat, zugleich Zeitpunkt, zu dem der Zusatz-Spracherkenner das Wort "Bremen" erkannt hat |
| T10 | Zeitpunkt, zu dem das Paket nach Hamburg die Kamera erreicht |
| T11 | Zeitpunkt, zu dem die Kamera ein Abbild des Pakets nach Hamburg erzeugt hat, zugleich Zeitpunkt, zu dem der Zusatz-Spracherkenner das Wort "Hamburg" erkannt hat |
| ZS | Zusatz-Spracherkenner |

## Patentansprüche

1. Verfahren zum Steuern des Transports eines Gegenstands (P1, P2),
wobei
der Gegenstand (P1, P2) mit Angaben zu einem Zielpunkt, zu dem der Gegenstand (P1, P2) zu transportieren ist, versehen ist und
die Schritte durchgeführt werden, dass
- die Zielpunkt-Angaben, mit denen der Gegenstand (P1, P2) versehen ist, wenigstens teileweise in eine Spracherfassungsstation (SE) eingegeben werden,
- ein Spracherkennungssystem (HS, ZS) die von der Spracherfassungsstation (SE) erfasste Spracheingabe auswertet,
- eine Fördereinrichtung (FE) den Gegenstand (P1, P2) abtransportiert,
- der Zielpunkt ermittelt wird, wofür das Auswertungsergebnis des Spracherkennungssystems (HS, ZS) verwendet wird, und
- der Transport des Gegenstands (P1, P2) an den ermittelten Zielpunkt ausgelöst wird,
**dadurch gekennzeichnet, dass**
das Spracherkennungssystem (HS, ZS) einen Haupt-Spracherkenner (HS) und einen Zusatz-Spracherkenner (ZS) umfasst,
beide Spracherkenner (HS, ZS) die erfasste Spracheingabe auswerten,
für die Ermittlung des Zielpunkts die Auswertungsergebnisse von beiden Spracherkennern (HS, ZS) verwendet werden,
ein Freigabesignal (FS) erzeugt wird, nachdem der Haupt-Spracherkenner (HS) die Auswertung der erfassten Spracheingabe abgeschlossen hat,
das Freigabesignal (FS) die beiden Vorgänge auslöst, dass
- die Spracherfassungsstation (SE) für die Eingabe von Zielpunkt-Angaben zu einem weiteren Gegenstand (P3, P4) freigegeben wird und
- die Fördereinrichtung (FE) den Gegenstand (P1, P2) abtransportiert.

2. Verfahren nach Anspruch 1,
**dadurch gekennzeichnet, dass**
der Zusatz-Spracherkenner (ZS) die Auswertung der erfassten Spracheingabe nach der Erzeugung des Freigabesignals (FS) beginnt.

3. Verfahren nach Anspruch 1 oder Anspruch 2,
**dadurch gekennzeichnet, dass**
- die Verarbeitung der erfassten Spracheingabe durch den Haupt-Spracherkenner (HS) den Schritt umfasst, dass der Haupt-Spracherkenner (HS) automatisch die Beendigung der Eingabe der Zielpunkt-Angaben in die Spracherfassungsstation (SE) erkennt,
- das Freigabesignal (FS) erzeugt wird, nachdem der Haupt-Spracherkenner (HS) die Beendigung erkannt hat, und
- das Auswertungsergebnis des Haupt-Spracherkenners (HS) an den Zusatz-Spracherkenner (ZS) übermittelt werden.

4. Verfahren nach einem der Ansprüche 1 bis 3,
**dadurch gekennzeichnet, dass**
eine obere Zeitschranke für die Dauer, die dem Haupt-Spracherkenner (HS) für die Auswertung einer Spracheingabe zur Verfügung steht, vorgegeben wird und
das Freigabesignal (FS) so erzeugt wird, dass zwischen
- dem Zeitpunkt, zu dem die Eingabe der Zielpunkt-Angaben beendet ist, und
- dem Zeitpunkt, zu dem der Haupt-Spracherkenner (HS) seine Auswertung der erfassten Spracheingabe beendet hat,
höchstens die Zeitschranke verstreicht.

5. Verfahren nach einem der Ansprüche 1 bis 4,
**dadurch gekennzeichnet, dass**
- die Fördereinrichtung (FE) den Gegenstand (P1, P2) zu einer Verarbeitungseinrichtung (3, 4) transportiert,
- die Verarbeitungseinrichtung (3, 4) den Gegenstand (P1, P2) verarbeitet und
- der Zusatz-Spracherkenner (ZS) seine Auswertung der erfassten Spracheingabe spätestens dann abschließt, wenn der Gegenstand (P1, P2) die Verarbeitungseinrichtung (3, 4) erreicht.

6. Verfahren nach Anspruch 5,
**dadurch gekennzeichnet, dass**
das Auswertungsergebnis, das der Zusatz-Spracherkenner (ZS) durch Verarbeitung der erfassten Spracheingabe erzeugt, an die Verarbeitungseinrichtung (3, 4) übermittelt wird und
die Verarbeitungseinrichtung (3, 4) das Auswertungsergebnis für die Verarbeitung des Gegenstands (P1, P2) verwendet.

7. Verfahren nach Anspruch 5 oder Anspruch 6,
**dadurch gekennzeichnet, dass**
- die Verarbeitungseinrichtung (3, 4) ein Bildaufnahmegerät (3) und ein Zeichenerkennungssystem (4) umfasst,
- das Bildaufnahmegerät (3) ein optisches Abbild (Abb) des Gegenstands (P1, P2) erzeugt und
- das Zeichenerkennungssystem (4) das Abbild (Abb) auswertet,
- wobei das Zeichenerkennungssystem (4) für die Auswertung des Abbilds (Abb) das Auswertungsergebnis des Zusatz-Spracherkenners (ZS) verwendet.

8. Verfahren nach einem der Ansprüche 1 bis 7,
**dadurch gekennzeichnet, dass**
- automatisch ermittelt wird, dass der Gegenstand (P1, P2) auf die Fördereinrichtung (FE) verbracht wurde und
- das Freigabesignal (FS) erzeugt wird, nachdem der Haupt-Spracherkenner (HS) seine Auswertung abgeschlossen hat und dieses Verbringen ermittelt wurde.

9. Verfahren nach einem der Ansprüche 1 bis 8,
**dadurch gekennzeichnet, dass**
- das Auswerteergebnis des Haupt-Spracherkenners (HS) an den Zusatz-Spracherkenner (ZS) übermittelt wird und
- das Freigabesignal (FS) erzeugt wird, nachdem diese Übermittlung abgeschlossen ist.

10. Verfahren nach einem der Ansprüche 1 bis 9,
**dadurch gekennzeichnet, dass**
- die erfassten Spracheingabe an den Zusatz-Spracherkenner (ZS) übermittelt werden und
- das Freigabesignal (FS) erst dann erzeugt wird, nachdem die Übermittlung der erfassten Spracheingabe an den Zusatz-Spracherkenner (ZS) abgeschlossen ist.

11. Verfahren nach Anspruch 10,
**dadurch gekennzeichnet, dass**
die Erzeugung des Freigabesignals (FS) **dadurch** ausgelöst wird, dass
- sowohl der Haupt-Spracherkenner (HS) die Auswertung der erfassten Spracheingabe abgeschlossen hat
- als auch die Übermittlung der erfassten Spracheingabe an den Zusatz-Spracherkenner (ZS) abgeschlossen ist.

12. Verfahren nach einem der Ansprüche 1 bis 11,
**dadurch gekennzeichnet, dass**
- nach der Erzeugung des Freigabesignals (FS) weitere Zielpunkt-Angaben, mit denen ein weiterer Gegenstand (P3, P4) versehen ist, in die Spracherfassungsstation (SE) eingegeben werden,
- beide Spracherkenner (HS, ZS) die erfasste weitere Spracheingabe auswerten,
- das Freigabesignal (FS) erneut erzeugt wird, nachdem der Haupt-Spracherkenner (HS) die Auswertung der weiteren Spracheingabe abgeschlossen hat,
- die erneute Erzeugung des Freigabesignals (FS) den Vorgang auslöst, dass die Fördereinrichtung (FE) den weiteren Gegenstand (P3, P4) abtransportiert und
- der Zusatz-Spracherkenner (ZS) mit der Auswertung der erfassen weiteren Spracheingabe beginnt, bevor der Zusatz-Spracherkenner (ZS) die Auswertung der erfassen Spracheingabe abgeschlossen hat.

13. Vorrichtung zum Steuern des Transports eines Gegenstands (P1, P2),
wobei
der Gegenstand (P1, P2) mit Angaben zu einem Zielpunkt, zu dem der Gegenstand (P1, P2) zu transportieren ist, versehen ist,
die Vorrichtung
- eine Spracherfassungsstation (SE),
- ein Spracherkennungssystem (HS, ZS),
- eine zentrale Ermittlungseinheit,
- eine Fördereinrichtung (FE) und
- eine Synchronisierungseinheit (6)
umfasst,
die Spracherfassungsstation (SE) dazu ausgestaltet ist, die Zielpunkt-Angaben, mit denen der Gegenstand (P1, P2) versehen ist und die wenigstens teileweise in die Spracherfassungsstation (SE) eingegeben werden, zu erfassen,
das Spracherkennungssystem (HS, ZS) dazu ausgestaltet ist, die von der Spracherfassungsstation (SE) erfasste Spracheingabe auszuwerten,
die Fördereinrichtung (FE) dazu ausgestaltet ist, den Gegenstand (P1, P2) abzutransportieren, und
die Vorrichtung dazu ausgestaltet ist,
- den Zielpunkt zu ermitteln,
- für diese Ermittlung das Auswertungsergebnis des Spracherkennungssystems zu verwenden und
- den Transport des Gegenstands (P1, P2) an den ermittelten Zielpunkt auszulösen,
**dadurch gekennzeichnet, dass**
das Spracherkennungssystem (HS, ZS) einen Haupt-Spracherkenner (HS) und einen Zusatz-Spracherkenner (ZS) umfasst,
beide Spracherkenner (HS, ZS) dazu ausgestaltet sind, die erfasste Spracheingabe auszuwerten,
die Vorrichtung dazu ausgestaltet ist, für die Ermittlung des Zielpunkts die Auswertungsergebnisse von beiden Spracherkennern (HS, ZS) zu verwenden,
die Synchronisierungseinheit (6) dazu ausgestaltet ist, ein Freigabesignal (FS) zu erzeugen, nachdem der Haupt-Spracherkenner (HS) die Auswertung der erfassten Spracheingabe abgeschlossen hat, und
die Synchronisierungseinheit weiterhin dazu ausgestaltet ist, die Spracherfassungsstation (SE) und Fördereinrichtung (FE) dergestalt zu synchronisieren, dass das Freigabesignal (FS) die beiden Vorgänge auslöst, dass
- die Spracherfassungsstation (SE) für die Eingabe von Zielpunkt-Angaben zu einem weiteren Gegenstand (P3, P4) freigegeben wird und
- die Fördereinrichtung (FE) den Gegenstand (P1, P2) abtransportiert.

## Claims

1. Method for controlling the transport of an object (P1, P2),
the object (P1, P2) being provided with information on a destination to which the object (P1, P2) is to be transported, and
the following steps being carried out
- the destination information with which the object (P1, P2) is provided is at least partially input to a speech detection station (SE),
- a speech recognition system (HS, ZS) evaluates the speech input detected by the speech detection station (SE),
- a conveying device (FE) transports the object (P1, P2),
- the destination is determined, for which the evaluation result from the speech recognition system (HS, ZS) is used, and
- the transport of the object (P1, P2) to the destination determined is initiated,
**characterized in that**
the speech recognition system (HS, ZS) comprises a main speech recognition unit (HS) and an additional speech recognition unit (ZS),
both speech recognition units (HS, ZS) evaluate the detected speech input,
the evaluation results from both speech recognition units (HS, ZS) are used to determine the destination,
a release signal (FS) is generated after the main speech recognition unit (HS) has concluded the evaluation of the detected speech input,
the release signal (FS) initiates the following two operations
- the speech detection station (SE) is released for the input of destination information on a further object (P3, P4), and
- the conveying device (FE) transports the object (P1, P2).

2. Method according to Claim 1,
**characterized in that**
the additional speech recognition unit (ZS) starts to evaluate the detected speech input after the release signal (FS) has been generated.

3. Method according to Claim 1 or Claim 2, **characterized in that**
- the processing of the detected speech input by the main speech recognition unit (HS) comprises the step of the main speech recognition unit (HS) automatically recognizing when the input of the destination information to the speech detection station (SE) has been completed,
- the release signal (FS) is generated after the main speech recognition unit (HS) has recognized the completion, and
- the evaluation result from the main speech recognition unit (HS) is transmitted to the additional speech recognition unit (ZS).

4. Method according to one of Claims 1 to 3,
**characterized in that**
an upper time limit is predetermined for the period available to the main speech recognition unit (HS) for evaluating a speech input, and
the release signal (FS) is generated in such a manner that at most the time limit elapses between
- the time at which the input of the destination information has been completed and
- the time at which the main speech recognition unit (HS) has completed its evaluation of the detected speech input.

5. Method according to one of Claims 1 to 4, **characterized in that**
- the conveying device (FE) transports the object (P1, P2) to a processing device (3, 4),
- the processing device (3, 4) processes the object (P1, P2), and
- the additional speech recognition unit (ZS) concludes its evaluation of the detected speech input at the latest when the object (P1, P2) reaches the processing device (3, 4).

6. Method according to Claim 5,
**characterized in that**
the evaluation result generated by the additional speech recognition unit (ZS) by processing the detected speech input
is transmitted to the processing device (3, 4), and
the processing device (3, 4) uses the evaluation result to process the object (P1, P2).

7. Method according to Claim 5 or Claim 6,
**characterized in that**
- the processing device (3, 4) comprises an image recording device (3) and a character recognition system (4),
- the image recording device (3) generates an optical image (Abb) of the object (P1, P2), and
- the character recognition system (4) evaluates the image (Abb),
- the character recognition system (4) using the evaluation result from the additional speech recognition unit (ZS) to evaluate the image (Abb).

8. Method according to one of Claims 1 to 7,
**characterized in that**
- it is automatically determined that the object (P1, P2) has been placed onto the conveying device (FE), and
- the release signal (FS) is generated after the main speech recognition unit (HS) has concluded its evaluation and this placement has been determined.

9. Method according to one of Claims 1 to 8,
**characterized in that**
- the evaluation result from the main speech recognition unit (HS) is transmitted to the additional speech recognition unit (ZS), and
- the release signal (FS) is generated after this transmission has been concluded.

10. Method according to one of Claims 1 to 9,
**characterized in that**
- the detected speech input is transmitted to the additional speech recognition unit (ZS), and
- the release signal (FS) is generated only after the transmission of the detected speech input to the additional speech recognition unit (ZS) has been concluded.

11. Method according to Claim 10,
**characterized in that**
the generation of the release signal (FS) is initiated by
- both the main speech recognition unit (HS) having concluded the evaluation of the detected speech input
- and the transmission of the detected speech input to the additional speech recognition unit (ZS) having been concluded.

12. Method according to one of Claims 1 to 11,
**characterized in that**
- after the release signal (FS) has been generated, further destination information with which a further object (P3, P4) is provided is input to the speech detection station (SE),
- both speech recognition units (HS, ZS) evaluate the further detected speech input,
- the release signal (FS) is generated again after the main speech recognition unit (HS) has concluded the evaluation of the further speech input,
- the renewed generation of the release signal (FS) initiates the operation of the conveying device (FE) transporting the further object (P3, P4), and
- the additional speech recognition unit (ZS) starts to evaluate the further detected speech input before the additional speech recognition unit (ZS) has concluded the evaluation of the detected speech input.

13. Device for controlling the transport of an object (P1, P2),
the object (P1, P2) being provided with information on a destination to which the object (P1, P2) is to be transported,
the device comprising
- a speech detection station (SE),
- a speech recognition system (HS, ZS),
- a central determination unit,
- a conveying device (FE), and
- a synchronization unit (6),
the speech detection station (SE) being configured to detect the destination information with which the object (P1, P2)
is provided and which is at least partially input to the speech detection station (SE),
the speech recognition system (HS, ZS) being configured to evaluate the speech input detected by the speech detection station (SE),
the conveying device (FE) being configured to transport the object (P1, P2), and
the device being configured
- to determine the destination,
- to use the evaluation result from the speech recognition system for this determination, and
- to initiate the transport of the object (P1, P2) to the destination determined,
**characterized in that**
the speech recognition system (HS, ZS) comprises a main speech recognition unit (HS) and an additional speech recognition unit (ZS),
both speech recognition units (HS, ZS) are configured to evaluate the detected speech input,
the device is configured to use the evaluation results from both speech recognition units (HS, ZS) to determine the destination,
the synchronization unit (6) is configured to generate a release signal (FS) after the main speech recognition unit (HS) has concluded the evaluation of the detected speech input, and
the synchronization unit is also configured to synchronize the speech detection station (SE) and the conveying device (FE) in such a manner that the release signal (FS) initiates the two operations of
- the speech detection station (SE) being released for the input of destination information on a further object (P3, P4) and
- the conveying device (FE) transporting the object (P1, P2).

## Revendications

1. Procédé de commande du transport d'un objet ( P1, P2 ), dans lequel
on munit l'objet ( P1, P2 ) d'indications d'une destination, à laquelle l'objet ( P1, P2 ) doit être transporté et
on effectue les stades dans lesquels
- on entre les indications de destination dont l'objet ( P1, P2 ) est muni, au moins en partie, dans un poste ( SE ) de détection vocale,
- un système ( HS, ZS ) de reconnaissance vocale exploite les entrées vocales détectées par le poste ( SE ) de détection vocale,
- un dispositif ( FE ) de convoyage transporte l'objet ( P1, P2 ),
- on détermine la destination en utilisant pour cela le résultat de l'exploitation du système ( HZ, ZS ) de reconnaissance vocale, et
- on déclenche le transport de l'objet ( P1, P2 ) à la destination déterminée,
**caractérisé en ce que**
le système ( HS, ZS ) de reconnaissance vocale comprend un reconnaisseur ( HS ) vocal principal et un reconnaisseur ( ZS ) vocal supplémentaire,
les deux reconnaisseurs ( HS, ZS ) vocaux exploitent les entrées vocales détectées,
on utilise, pour la détermination de la destination, les résultats d'exploitation des deux reconnaisseurs ( HS, ZS ) vocaux,
on produit un signal ( FS ) de libération, après que le reconnaisseur ( HS ) vocal principal a terminé l'exploitation des entrées vocales détectées,
le signal ( FS ) de libération déclenche les deux opérations suivant lesquelles
- le poste ( SE ) de détection vocale est libéré pour l'entrée d'indications de destination d'un autre objet ( P3, P4 ) et
- le dispositif ( FE ) de convoyage transporte l'objet ( P1, P2 ).

2. Procédé suivant la revendication 1,
**caractérisé en ce que**
le reconnaisseur ( ZS ) vocal supplémentaire commence l'exploitation des entrées vocales détectées après la production du signal ( FS ) de libération.

3. Procédé suivant la revendication 1 ou la revendication 2,
**caractérisé en ce que**
- le traitement des entrées vocales détectées par le reconnaisseur ( HS ) vocal principal comprend le stade suivant lequel le reconnaisseur ( HS ) vocal principal reconnaît automatiquement la fin de l'entrée des indications de destination dans le poste ( SE ) de détection vocale,
- on produit le signal ( FS ) de libération après que le reconnaisseur ( HS ) vocal principal a reconnu la fin, et
- on transmet le résultat d'exploitation du reconnaisseur ( HS ) vocal principal au reconnaisseur ( ZS ) vocal supplémentaire.

4. Procédé suivant l'une des revendications 1 à 3,
**caractérisé en ce que**
on prescrit une limite de temps supérieure pour la durée mise à disposition du reconnaisseur ( HS ) vocal principal pour l'exploitation d'une entrée vocale et
on produit le signal ( FS ) de libération, de manière à ce qu'il s'écoule au plus la limite de temps entre
- l'instant où l'entrée des indications de destination est finie, et
- l'instant où le reconnaisseur ( HS ) vocal principal finit son exploitation des entrées vocales détectées.

5. Procédé suivant l'une des revendications 1 à 4,
**caractérisé en ce que**
- le dispositif ( FE ) de convoyage transporte l'objet ( P1, P2 ) vers un dispositif ( 3, 4 ) de traitement,
- le dispositif ( 3, 4 ) de traitement traite l'objet ( P1, P2 ) et
- le reconnaisseur ( ZS ) vocal supplémentaire termine son exploitation des entrées vocales détectées au plus tard lorsque l'objet ( P1, P2 ) atteint le dispositif ( 3, 4 ) de traitement.

6. Procédé suivant la revendication 5,
**caractérisé en ce que**
on transmet le résultat de l'exploitation, que le reconnaisseur ( ZS ) vocal supplémentaire produit par traitement des entrées vocales détectées, au dispositif ( 3, 4 ) de traitement et
le dispositif ( 3, 4 ) de traitement utilise le résultat de l'exploitation pour le traitement de l'objet ( P1, P2 ).

7. Procédé suivant la revendication 5 ou la revendication 6,
**caractérisé en ce que**
- le dispositif ( 3, 4 ) de traitement comprend un appareil ( 3 ) d'enregistrement d'images et un système ( 4 ) de reconnaissance de caractères,
- l'appareil ( 3 ) d'enregistrement d'images produit une reproduction ( Abb ) optique de l'objet ( P1, P2 ) et
- le système ( 4 ) de reconnaissance de caractères exploite la reproduction ( Abb ),
- dans lequel le système ( 4 ) de reconnaissance de caractères utilise pour l'exploitation de la reproduction ( Abb ) le résultat d'exploitation du reconnaisseur ( ZS ) vocal supplémentaire.

8. Procédé suivant l'une des revendications 1 à 7,
**caractérisé en ce que**
- on détermine automatiquement le temps passé par l'objet ( P1, P2 ) sur le dispositif ( FE ) de convoyage et
- on produit le signal ( FS ) de libération après que le reconnaisseur ( HS ) vocal principal a terminé son exploitation et que ce temps passé a été déterminé.

9. Procédé suivant l'une des revendications 1 à 8,
**caractérisé en ce que**
- on transmet le résultat d'exploitation du reconnaisseur ( HS ) vocal principal au reconnaisseur ( ZS ) supplémentaire et
- on produit le signal ( FS ) de libération après que cette transmission est terminée.

10. Procédé suivant l'une des revendications 1 à 9,
**caractérisé en ce que**
- on transmet les entrées vocales détectées au reconnaisseur ( ZS ) vocal supplémentaire et
- on ne produit le signal ( FS ) de libération, qu'après que la transmission des entrées vocales détectées au reconnaisseur ( ZS ) vocal supplémentaire est terminée.

11. Procédé suivant la revendication 10,
**caractérisé en ce que**
on déclenche la production du signal ( FS ) de libération par le fait que
- tant le reconnaisseur ( HS ) vocal principal a terminé l'exploitation des entrées vocales détectées
- qu'également la transmission des entrées vocales détectées au reconnaisseur ( ZS ) vocal supplémentaire est terminée.

12. Procédé suivant l'une des revendications 1 à 11,
**caractérisé en ce que**
- après la production du signal ( FS ) de libération, on entre dans le poste ( SE ) de détection vocale d'autres indications de destination, dont un autre objet ( P3, P4 ) est muni,
- les deux reconnaisseurs ( HS, ZS ) vocaux exploitent les autres entrées vocales détectées,
- on produit à nouveau le signal ( FS ) de libération, après que le reconnaisseur ( HS ) vocal principal a terminé l'exploitation des autres entrées vocales,
- la production renouvelée du signal ( FS ) de libération déclenche l'opération suivant laquelle le dispositif ( FE ) convoyeur transporte l'autre objet ( P3, P4 ) et
- le reconnaisseur ( ZS ) vocal supplémentaire commence à exploiter les autres entrées vocales détectées avant que le reconnaisseur ( ZS ) vocal supplémentaire ait terminé l'exploitation des entrées vocales détectées.

13. Installation de commande du transport d'un objet ( P1, P2 ),
dans laquelle
l'objet ( P1, P2 ) est muni d'indications d'une destination à laquelle l'objet ( P1, P2 ) doit être transporté,
l'installation comprend
- un poste ( SE ) de détection vocale,
- un système ( HS, ZS ) de reconnaissance vocale,
- une unité centrale de détermination,
- un dispositif ( FE ) de convoyage et
- une unité ( 6 ) de synchronisation,
le poste ( SE ) de détection vocale étant conformé de manière à détecter les indications de destination dont l'objet ( P1, P2 ) est muni et à les entrer, au moins en partie, dans le poste ( Se ) de détection vocale,
le système ( HS, ZS ) de reconnaissance vocale est conformé de manière à exploiter les indications vocales détectées par le poste ( SE ) de détection vocale,
le dispositif ( FE ) de convoyage est conformé de manière à transporter l'objet ( P1, P2 ), et
l'installation est conformée pour
- déterminer la destination,
- utiliser pour cette détermination le résultat d'exploitation du système de reconnaissance vocale et
- déclencher le transport de l'objet ( P1, P2 ) vers la destination déterminée,
**caractérisée en ce que**
le système ( HS, ZS ) de reconnaissance vocale comprend un reconnaisseur vocal ( HS ) principal et un reconnaisseur ( ZS ) vocal supplémentaire,
les deux reconnaisseurs ( HS, ZS ) vocaux sont conformés de manière à exploiter les entrées vocales détectées, l'installation est conformée de manière à utiliser, pour la détermination de la destination, les résultats d'exploitation des deux reconnaisseurs ( HS, ZS ) vocaux, l'unité ( 6 ) de synchronisation est conformée pour produire un signal ( FS ) de libération, après que le reconnaisseur ( HS ) vocal principal a terminé l'exploitation des entrées vocales détectées, et
l'unité de synchronisation est conformée, en outre, pour synchroniser le poste ( SE ) de détection vocale et le dispositif ( FE ) de convoyage, de manière à ce que le signal ( FS ) de libération déclenche les deux opérations suivant lesquelles
- le poste ( SE ) de détection vocale est libéré pour l'entrée d'indications de destination d'un autre objet ( P3, P4 ) et
- le dispositif ( FE ) de convoyage transporte l'objet ( P1, P2 ).
